# EUROPÄISCHE PATENTSCHRIFT

(11) **EP 0 497 913 B1**
(45) Veröffentlichungstag und Bekanntmachung des Hinweises auf die Patenterteilung: **22.06.1994**
(21) Anmeldenummer: 90917641.4
(22) Anmeldetag: 26.10.1990
(51) Int. Cl.: F16D 7/02, F16C 25/08

(54) **ANTRIEB**
DRIVE
ENTRAINEMENT

(30) Priorität: 28.10.1989 DE 3936012
(43) Veröffentlichungstag der Anmeldung: 12.08.1992
(73) Patentinhaber: ZF FRIEDRICHSHAFEN Aktiengesellschaft, 88038 Friedrichshafen (DE)
(72) Erfinder: PAUL, Michael, D-8390 Passau (DE); WILKS, Eberhard, D-8391 Hutthurm (DE); BERGHOFF, Peter, D-8391 Tiefenbach (DE)
(86) Internationale Anmeldenummer: EP9001907
(87) Internationale Veröffentlichungsnummer: WO9106783

(56) Entgegenhaltungen:
- DE-A- 3 720 168
- DE-A- 4 003 823
- GB-A- 2 136 092

## Beschreibung

Die Erfindung betrifft einen Antrieb mit einer Überlastsicherung, gemäß dem Oberbegriff des ersten Anspruchs.

Angetriebene Achsen von Kraftfahrzeugen sind mit einem im allgemeinen mehrstufigen Wechselgetriebe verbunden. Beim Schalten des Getriebes können z. B. durch unsachgemäße Handhabung kurzzeitig hohe Momente auf die Achse übertragen werden und Lebensdauer sowie Funktion der Achse beeinträchtigen.

Die DE-C 34 18 558 zeigt eine in mehreren vorgegebenen Stufen einstellbare Reibungsrutschkupplung zum Einsatz in Antriebssträngen, insbesondere zum Antrieb eines landwirtschaftlichen Geräts von der Zapfwelle eines Schleppers. Diese Reibungsrutschkupplung ist jedoch nicht geeignet zur Montage unmittelbar am Achsgehäuse als Überlastsicherung für eine angetriebene Achse.

Aufgabe der Erfindung ist es, einen Achsantrieb mit einer Reibungsrutschkupplung als Überlastsicherung zu verbinden. Die Reibungsrutschkupplung soll kompakt an das Achsgehäuse anschließen, und die axiale Vorspannung der Lagerung des Achsantriebs soll von außen frei zugänglich einstellbar sein.

Erfindungsgemäß wird dies dadurch erreicht, daß die Kupplungsnabe mit einem Ritzel für einen Achsantrieb versehen ist und mit zwei Kegelrollenlagern in einem Achsgehäuse gelagert ist, wobei der Innenring des ritzelseitigen Kegelrollenlagers von einem Anschlag auf der Kupplungsnabe und dessen Außenring im Achsgehäuse gehalten sind, und das der Reibungsrutschkupplung zugewandte Kegelrollenlager sich mit seinem Innenring über ein Federelement an einem axialen Anschlag auf der Kupplungsnabe und seinem Außenring im Achsgehäuse abstützt und am gegenüber dem Ritzel liegenden Ende der Kupplungsnabe eine stufenlose Einstellvorrichtung über Distanzringe und zwischen den Innenlamellen angeordneten Druckringen die Kegelrollenlager axial verspannt.

Gemäß Anspruch 2 wird erreicht, daß die Einstellvorrichtung und die Übertragungselemente insgesamt aus Normteilen bestehen.

Gemäß Anspruch 3 kann mit einem temperaturabhängigen Ausdehnungselement die Wärme der Reibungsrutschkupplung genutzt werden, um eine temperaturabhängige Übertragungscharakteristik der Überlastsicherung zu erhalten.

Gemäß Anspruch 4 dient ein Federelement zum Ausgleich der Veränderung der Übertragungscharakteristik durch Verschleiß der Lamellen und zur Einstellung eines Grundmoments.

Gemäß Anspruch 5 ist das Grenzdrehmoment der Reibungsrutschkupplung stufenlos einstellbar.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

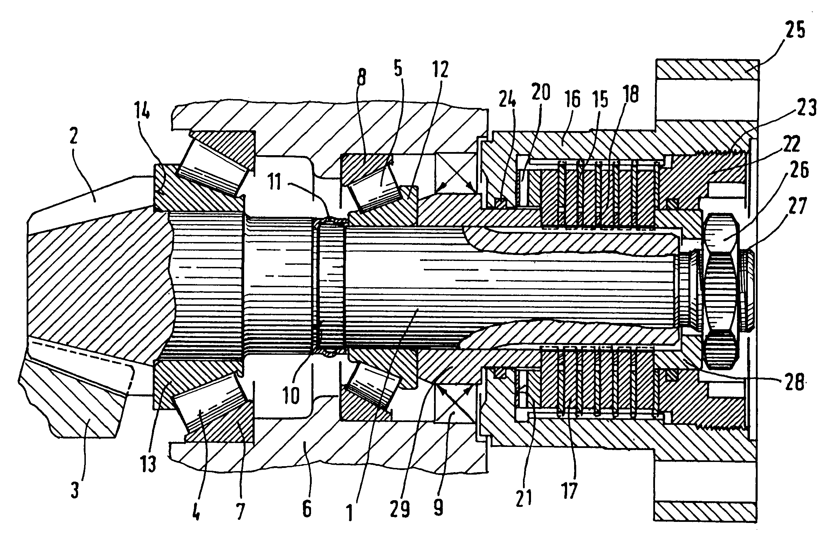

- Fig. 1: stellt ein Ausführungsbeispiel der Erfindung dar.

Eine Kupplungsnabe 1 mit einem Ritzel 2 steht mit dem Tellerrad 3 eines Achsverteilergetriebes (nicht dargestellt) im Eingriff und ist drehbar in Kegelrollenlagern 4, 5. In ein Achsgehäuse 6 sind Außenringe 7, 8 der Kegelrollenlager 4, 5 und ein Dichtring 9 eingepaßt. In axialer Richtung stützt sich an einem Anschlag 10 der Kupplungsnabe über ein Federelement 11 ein Innenring 12 des Kegelrollenlagers 5 ab. Ein Innenring 13 des Kegelrollenlagers 4 ist von einem Anschlag 14 am Ritzel 2 axial gehalten.

Leicht gewellte Außenlamellen 15 sind in einem Kupplungsgehäuse 16 drehfest und axial verschieblich gehalten. Innenlamellen 17 sind drehfest und axial verschieblich auf der Kupplungsnabe 1 gehalten. Koaxial zwischen den Innenlamellen 17 befinden sich Druckringe 18. Außenlamellen 15 und Druckringe 18 haben die gleiche Materialstärke. Ein temperaturabhängiges Ausdehnungselement und/oder eine Tellerfeder 20 befinden sich zwischen einer Stirnfläche 21 des Kupplungsgehäuses 16 und den Innenlamellen 17.

Das übertragbare Grenzdrehmoment der Reibungsrutschkupplung ist mittels einer Schraube 22 auf einem koaxialen Gewinde 23 des Kupplungsgehäuses 16 stufenlos einstellbar. Dichtringe 24 dichten die Reibungsrutschkupplung nach außen ab. An einem Flansch 25 des Kupplungsgehäuses 16 kann eine Antriebswelle (nicht dargestellt) befestigt werden.

Die Kupplungsnabe 1 ist auf der dem Ritzel 2 abgewandten Seite mit einem Gewinde 27 versehen, auf dem eine Mutter 26 in axialer Richtung stufenlos zugestellt werden kann. Die Mutter 26 wirkt über einen Distanzring 28, die Innenlamellen 17 und die zwischen den Innenlamellen angeordneten Druckringe 18 und einen weiteren Distanzring 29 auf den Innenring 12 des Kegelrollenlagers 5. Betragsmäßig wirken die gleichen Kräfte in entgegengesetzter Richtung, wenn durch Drehung der Mutter 26 auf dem Gewinde 27 das Ritzel 2 und die Mutter 26 sich aufeinander zu bewegen, und dabei der Anschlag 14 über den Innenring 13 und die Distanzringe 28, 29 und die Druckringe 18 über den Innenring 12 die Kegelrollenlager 4, 5 gegen axiale Anschläge im Achsgehäuse 6 drücken.

### Bezugszeichen

- 1: Kupplungsnabe
- 2: Ritzel
- 3: Tellerrad
- 4: Kegelrollenlager
- 5: Kegelrollenlager
- 6: Achsgehäuse
- 7: Außenring
- 8: Außenring
- 9: Dichtring
- 10: Anschlag
- 11: Federelement
- 12: Innenring
- 13: Innenring
- 14: Anschlag
- 15: Außenlamellen
- 16: Kupplungsgehäuse
- 17: Innenlamellen
- 18: Druckringe
- 19: Ausdehnungselement
- 20: Tellerfeder
- 21: Stirnfläche des Kupplungsgehäuses 16
- 22: Schraube
- 23: Gewinde
- 24: Dichtringe
- 25: Flansch
- 26: Mutter
- 27: Gewinde
- 28: Distanzring
- 29: Distanzring

## Patentansprüche

1. Antrieb mit einer einstellbaren Reibungsrutschkupplung, an deren Kupplungsgehäuse (16) und Kupplungsnabe (1) wechselweise drehfest, jedoch axial verschiebbare Außen- bzw. Innenlamellen (15, 17) befestigt sind, dadurch **gekennzeichnet,** daß die Kupplungsnabe (1) mit einem Ritzel (2) für einen Achsantrieb versehen ist und mit zwei Kegelrollenlagern (4, 5) in einem Achsgehäuse (6) gelagert ist, wobei der Innenring (13) des ritzelseitigen Kegelrollenlagers (4) von einem Anschlag (14) auf der Kupplungsnabe (1) und dessen Außenring (7) im Achsgehäuse (6) gehalten sind, und das der Reibungsrutschkupplung zugewandte Kegelrollenlager (5) sich mit seinem Innenring (12) über ein Federelement (11) an einem axialen Anschlag (10) auf der Kupplungsnabe (1) und seinem Außenring (8) im Achsgehäuse (1) abstützt und am gegenüber dem Ritzel (2) liegenden Ende der Kupplungsnabe (1) eine stufenlose Einstellvorrichtung (26, 27) über Distanzringe (28, 29) und zwischen den Innenlamellen (17) angeordneten Druckringen (18) die Kegelrollenlager (4, 5) axial vorspannt.

2. Antrieb mit einer Reibungsrutschkupplung nach Anspruch 1, dadurch **gekennzeichnet,** daß die Kupplungsnabe (1) mit einem Gewinde (27) versehen ist und eine Mutter (26) über einen Distanzring (28) und Druckringe (18) zwischen den Innenlamellen (17) und einen weiteren Distanzring (29) auf die Innenringe (12, 13) der Kegelrollenlager (4, 5) wirkt.

3. Antrieb mit einer Reibungsrutschkupplung nach Anspruch 1, dadurch **gekennzeichnet,** daß ein Ausdehnungselement die Reibungsrutschkupplung temperaturabhängig axial beaufschlagt.

4. Antrieb mit einer Reibungsrutschkupplung nach Anspruch 1, dadurch **gekennzeichnet,** daß ein federndes Element (20) die Lamellen (15, 17) der Rutschkupplung axial vorspannt.

5. Antrieb mit einer Reibungsrutschkupplung nach Anspruch 1, dadurch **gekennzeichnet,** daß das Grenzdrehmoment der Reibungsrutschkupplung mittels einer Schraube (22) auf einem stufenlosen Gewinde (23) im Kupplungsgehäuse einstellbar ist.

## Claims

1. A drive comprising an adjustable friction clutch with outer and inner discs (15, 17) arranged in an alternating sequence fixed onto the clutch housing (16) and clutch hub (1) of the adjustable friction clutch in such a manner that the discs cannot rotate but can move in an axial direction,
**characterized** in that, the clutch hub (1) has a pinion gear (2) for an axle drive and is mounted in the axle housing (6) on two tapered roller bearings (4, 5), whereby the inner ring (13) of the tapered roller bearing (4) on the pinion gear side is held within the axle housing (6) between a stop (14) on the clutch hub (1) and the outer ring (7) of the same bearing (4), the tapered roller bearing (5) facing the friction clutch is braced on its inner ring (12) by means of a spring element (11) acting against an axial stop (10) on the clutch hub (1) whilst the outer ring (8) of the bearing (5) is braced against the axle housing, and the tapered roller bearings (4, 5) are subjected to an axial pre-load by means of a continuously adjustable setting device (26, 27) located at the end of the clutch hub (1) opposite the pinion gear (2) and acting through distance rings (28, 29) and compression rings (18) positioned in between the inner discs (17).

2. A drive comprising an adjustable friction clutch in accordance with Claim 1, **characterized** in that, the clutch hub (1) has a thread (27) and a nut (26) acts on the inner rings (12, 13) of the tapered roller bearings (4, 5) by means of a distance ring (28), compression rings (18) positioned in between the inner discs (17) and a further distance ring (29).

3. A drive comprising an adjustable friction clutch in accordance with Claim 1, **characterized** in that, a temperature-dependent expansion element exerts an axial load on the friction clutch.

4. A drive comprising an adjustable friction clutch in accordance with Claim 1, **characterized** in that, a spring element (20) exerts an axial pre-load on the discs (15, 17) in the friction clutch.

5. A drive comprising an adjustable friction clutch in accordance with Claim 1, **characterized** in that, the limit torque of the friction clutch can be adjusted by means of a bolt element (22) in a continuous thread (23) in the clutch housing.

## Revendications

1. Entraînement avec accouplement à friction sur le carter (16) et le moyeu (1) duquel des lamelles internes et externes (15, 17) sont tour à tour fixées de façon à résister aux torsions, mais qui sont cependant déplaçables axialement, **caractérisé** par le fait que le moyeu de l'accouplement (1) est muni d'un pignon (2) pour un entraînement axial et tourne sur paliers dans une enveloppe d'essieu (6) avec deux paliers coniques à rouleaux (4, 5) ; la bague intérieure (13) du palier conique à rouleaux côté pignon (4) est tenue par une butée (14) sur le moyeu de l'accouplement (1) et par la bague extérieure (7) du moyeu dans l'enveloppe de l'essieu (6); le palier conique à rouleaux (5) tourné vers l'accouplement à friction appuie sa bague intérieure (12) sur une butée axiale (10) se trouvant sur le moyeu de l'accouplement (1) au moyen d'un élément d'accouplement (11) et sa bague extérieure (8) dans l'enveloppe de l'essieu (6); un dispositif de réglage en continu (26, 27) précontraint axialement les paliers coniques à rouleaux (4, 5) au bout du moyeu d'accouplement (1) en face du pignon (2) au moyen de bagues d'écartement (28, 29) et entre les cônes de serrage (18) placés entre les lamelles intérieures (17).

2. Entraînement avec accouplement à friction suivant la revendication 1, **caractérisé** par le fait que le moyeu de l'accouplement (1) est muni d'un filetage (27) et qu'un écrou (26) agit sur les bagues intérieures (12, 13) des paliers coniques à rouleaux (4, 5) au moyen d'une bague d'écartement (28) et de cônes de serrage (18) entre les lamelles intérieures (12, 13) et d'une autre bague d'écartement (29).

3. Entraînement avec accouplement à friction suivant la revendication 1, **caractérisé** par le fait qu'un élément extensible agit axialement sur l'accouplement selon la température.

4. Entraînement avec accouplement à friction suivant la revendication 1, **caractérisé** par le fait qu'un élément à ressort (20) précontraint axialement les lamelles (15, 17).

5. Entraînement avec accouplement à friction suivant la revendication 1, **caractérisé** par le fait que le couple limite de l'accouplement à friction est réglable au moyen d'une vis (22) avec filetage en continu (23) dans le carter d'embrayage.
